# EUROPEAN PATENT APPLICATION

(11) **EP 1 788 794 A1**
(43) Date of publication of application: **23.05.2007**
(21) Application number: 06255898.6
(22) Date of filing: 17.11.2006
(51) Int. Cl.: H04N 1/00

(54) **Image processing apparatus, preview data moving method, and computer program product**

(30) Priority: 18.11.2005 JP 2005334193; 27.07.2006 JP 2006205328
(71) Applicant: Ricoh Company, Ltd., Tokyo 143-8555 (JP)
(72) Inventor: Kato, Yoshinaga, Ricoh Co., Ltd., Tokyo 143-8555 (JP); Takami, Junichi, Ricoh Co., Ltd., Tokyo 143-8555 (JP); Sakayori, Tetsuya, Ricoh Co., Ltd., Tokyo 143-8555 (JP); Yano, Takashi, Ricoh Co., Ltd., Tokyo 143-8555 (JP); Saeki, Iwao, Ricoh Co., Ltd., Tokyo 143-8555 (JP); Shida, Haruo, Ricoh Co., Ltd., Tokyo 143-8555 (JP); Sakuramata, Yoshifumi, Ricoh Co., Ltd., Tokyo 143-8555 (JP); Mano, Hiroko, Ricoh Co., Ltd., Tokyo 143-8555 (JP)
(74) Representative: Mounteney, Simon James

(57) **Abstract**

An image processing apparatus includes a displaying unit (16b), a movement specifying unit (16c), and a moving unit (16d). The displaying unit (16b) displays a preview including a data image corresponding to data input thereto and at least one of a function image corresponding to a selected function and a print-area image corresponding to a print area within which the data is to be printed. The movement specifying unit (16c) specifies, in response to an input to move any image in the preview, a distance and a direction based on which the image is to be moved. The moving unit (16d) moves the image by the distance in the direction to rearrange layout of the preview.

## Description

### BACKGROUND OF THE INVENTION

### 1. Field of the Invention

The present invention relates to an image processing apparatus, a computer program product, and a preview data moving method.

### 2. Description of the Related Art

Various devices have been widely used such as a scanner for reading data, a copier for copying the data read by the scanner, a printer and a facsimile machine for printing data input from outside, and a multifunction product (MFP) having the functions described above.

A user can set parameters related to image processing, for example, page margins, or parameters for stamping, stapling, punching, etc., for such a device.

With the conventional MFP, the user, who has set the parameters, cannot check a printed state of data before the data is actually printed. That is, the user cannot realize erroneous printing until the data is actually printed. For example, if a punch hole overlaps an output image, the resultant print is unacceptable, resulting in a waste of paper.

To solve the problems, Japanese Patent Application Laid-open No. 2001-67347 discloses an image processing apparatus capable of displaying, prior to actual printing, a preview of a prescanned original image processed with various functions. This allows a user to change print parameters, if required, while viewing the preview.

In the conventional technology, however, the user cannot directly update the parameters on the preview screen. Practically, to correct the parameter of the punch hole overlapping the image, the user cannot specify a position of the punch hole by directly pointing a desired position on the preview screen with, for example, a finger. Therefore, it is difficult to obtain a desired print result.

### SUMMARY OF THE INVENTION

It is an object of the present invention to at least partially solve the problems in the conventional technology.

According to an aspect of the present invention, an image processing apparatus includes a displaying unit that displays a preview including a data image corresponding to data input thereto and at least one of a function image corresponding to a selected function and a print-area image corresponding to a print area within which the data is to be printed, a movement specifying unit that specifies, in response to an input to move any image in the preview, a distance and a direction based on which the image is to be moved, and a moving unit that moves the image by the distance in the direction to rearrange layout of the preview to obtain a rearranged preview.

According to another aspect of the present invention, an image processing apparatus includes a data creating unit that creates a preview including a data image corresponding to data input thereto and at least one of a function image corresponding to a selected function and a print-area image corresponding to a print area within which the data is to be printed, a displaying unit that displays the preview, a movement specifying unit that specifies, in response to an input to move any image in the preview, a distance and a direction based on which the image is to be moved, and a moving unit that moves the image by the distance in the direction to rearrange layout of the preview.

According to still another aspect of the present invention, a preview data moving method includes creating a preview including a data image corresponding to data input thereto and at least one of a function image corresponding to a selected function and a print-area image corresponding to a print area within which the data is to be printed, displaying the preview, receiving an input that specifies a distance and a direction to move any image in the preview, and moving the image by the distance in the direction to rearrange layout of the preview.

According to still another aspect of the present invention, a computer program product includes a computer usable medium having computer readable program codes embodied in the medium that when executed causes a computer to implement the above methods.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a functional block diagram of a multifunction product (MFP) according to a first embodiment of the present invention;
Fig. 2 is an example of a preview image displayed on a display section shown in Fig. 1;
Fig. 3 is a table of a data structure of the preview image;
Fig. 4 is a schematic for explaining a position of data;
Fig. 5 is a flowchart of a data moving process performed by the MFP;
Fig. 6 is an example of a preview image after image data is moved downward not to overlap punch holes;
Fig. 7 is a table of a data structure of the preview image shown in Fig. 6;
Fig. 8 is an example of a preview image after a print area is moved upward;
Fig. 9 is a table of a data structure of the preview image shown in Fig. 8;
Fig. 10 is an example of a preview image according to a second embodiment of the present invention;
Fig. 11 is an example of a preview image according to a third embodiment of the present invention;
Fig. 12 is a schematic block diagram of a print system according to a fourth embodiment of the present invention;
Fig. 13 is a schematic block diagram of a computer shown in Fig. 12;
Fig. 14 is a schematic block diagram of a printer shown in Fig. 12;
Fig. 15 is a block diagram of relevant parts of the computer; and
Fig. 16 is an example of a display screen displayed by a printer driver.

### DETAILED DESCRIPTION OF THE PREFERRED EMBODIMENTS

Exemplary embodiments of the present invention are described in details below with reference to the accompanying drawings.

In the embodiments described below, an MFP is applied as an example to an image processing apparatus. The MFP has combined functions of, for example, copying, faxing, printing, scanning, and a function of distributing an input image (an original data read by a scanner or input to a printer or a facsimile machine).

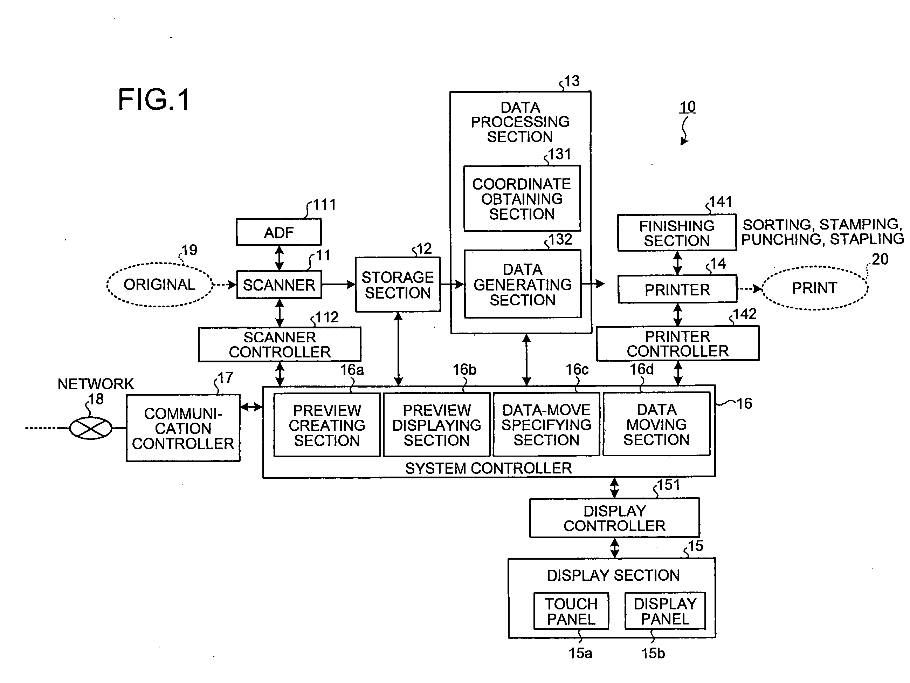

Fig. 1 is a functional block diagram of an image processing apparatus 1, i.e., an MFP 10 according to the first embodiment. The MFP 10 includes a scanner 11, an auto document feeder (ADF) 111, a scanner controller 112, a storage section 12, a data processing section 13, a printer 14, a printer controller 142, a finishing section 141, a display section 15, a display controller 151, a system controller 16, and a communication controller 17. The MFP 10 is connected to a network 18 via the communication controller 17. After the MFP 10 reads data from an original 19 and processes the data, the MFP 10 outputs the data as a print 20.

The system controller 16 is connected to the respective sections to control the entire MFP 10. For example, the system controller 16 provides, to the scanner 11, scanning area information suitable to a selected paper size. The system controller 16 includes a central processing unit (CPU), a read only memory (ROM), and a random access memory (RAM), all of them being not shown. The CPU loads computer programs from the ROM into a work area of the RAM and executes the programs to perform various processes.

The computer program executed by the MFP 10 can be provided in a form of an installable or executable file, which is stored in a computer-readable storage medium such as a compact disk read only memory (CD-ROM), a flexible disk (FD), a compact disk recordable (CD-R), and a digital versatile disk (DVD). In this case, the CPU of the system controller 16 reads the computer program from the storage medium and loads the program into a main storing device (not shown) to enable the MFP 10 to perform various functions. The computer program can be installed on a computer connected to the network 18 like the Internet and downloaded via the network 18. The computer program can also be distributed via the network 18 like the Internet.

The communication controller 17 is connected to the network 18 such as a local area network (LAN) or the Internet to exchange, for example, image data and control data with another device connected to the network 18 according to a communication protocol.

The scanner controller 112 controls the scanner 11 according to an instruction from the system controller 16.

The scanner 11, which is controlled by the scanner controller 112, converts data of the original 19 into digital format. The scanner 11 can automatically read a plurality of pages of the original 19 that the ADF 111 feeds one by one to a reading position of the scanner 11. The scanner 11 can also automatically read the original 19 printed on both sides that the ADF 111 feeds to the scanner 11 while reversing the original 19 after one side thereof is read to make the scanner 11 read another side.

The storage section 12 is a buffer memory that temporarily stores data, for example, read by the scanner 11 and sent from an external device via the network 18 according to an instruction from the system controller 16. The MFP 10 can form an image based on any data read by the scanner 11 or sent from an external device via the network 18.

Following an instruction from the system controller 16, the data processing section 13 performs gamma correction and modulation transfer function (MTF) correction, and adjusts tones by, for example, slicing or by dithering, of the data read by the scanner 11 and temporarily stored in the storage section 12 to obtain binary (multivalued) data. The data processing section 13 also performs various processes such as image processing (zooming up or down, density adjustment, and color adjustment), area edit processing (deleting, moving, and reversing of an area), and layout processing (duplex or single-side printing, intensive printing, and adjustment of page margins) based on parameters set by a user.

The data processing section 13 includes a coordinate obtaining section 131 and a data generating section 132. The coordinate obtaining section 131 obtains coordinates of the data stored in the storage section 12. The data generating section 132 processes the data according to various setting items selected for the data, thereby generating screen data. The screen data includes preview data to be printed and information for displaying menu items for specifying parameters related to the preview data.

The printer controller 142 controls the printer 14 according to an instruction from the system controller 16.

The printer 14 employs electrophotographic printing. The printer 14, which is controlled by the printer controller 142, scans a deflected light beam based on the data processed by the data processing section 13 to form a latent image formed on a photoconductor, develops the latent image into a toner image, transfers the toner image onto transfer paper, and fixes the image. Besides the electrophotographic printing, examples of printing methods applicable to the printer 14 include inkjet printing, dye sublimation thermal-transfer printing, silver halide photography printing, direct thermal recording, and fusion thermal-transfer printing.

The finishing section 141 is mounted on the printer 14. The finishing section 141 performs various finishing functions according to automatic settings or user settings such as sorting the prints 20 by unit or by page, stamping a predefined mark on a printed medium, stapling a plurality of the printed media, or punching holes in the printed media for binding or filing.

The display controller 151 controls input from or output to the display section 15 according to an instruction from the system controller 16. For example, the display controller 151 outputs the data processed by the data processing section 13 on a touch panel 15a and a display panel 15b in the display section 15. More practically, the display controller 151 displays the preview data on the display panel 15b according to the screen data, and also controls input from the touch panel 15a. Although the display panel 15b and the touch panel 15a are illustrated independently in Fig. 1, they are integrated in the embodiments.

The touch panel 15a electrically or magnetically detects a position where an input device (hereinafter "pointer") touches on the panel. As the pointer (not shown) for the touch panel 15a can be used a fingertip, a stylus pen, and other tools for entering input by touching the panel. The user selects desired items and parameters for print settings by touching the touch panel 15a with the pointer.

Although only the touch input is described as a method for entering input via the touch panel 15a, another method can be allowable. With a hard key provided at the display section 15 in addition to the touch panel 15a, the user can push the key to send an instruction such as print command. The MFP 10 can include a dedicated display device as the display panel 15b.

The display section 15, which is controlled by the display controller 151, displays the preview data and the menu items selected by the user via the touch panel 15a to specify settings or parameters for data to be printed.

The display section 15 displays the functions selectable on the MFP 10 in a form of menu and receives input when the user selects one of the menu items. When the pointer touches a point on the touch panel 15a, the display controller 151 detects coordinates of the point. If the point corresponds to an item, the display controller 151 determines the item is selected. The display section 15 can receive various types of setting input or parameters. Examples of parameters include one relating to scanning conditions under which the scanner 11 scans the original 19, one relating to processing of the scanned data performed by the data processing section 13, one relating to printing conditions for the printer 11, and one relating to finishing process such as sorting, stapling, and hole punching performed by the finishing section 141.

The system controller 16 includes a preview creating section 16a, a preview displaying section 16b, a data-move specifying section 16c, and a data moving section 16d. After the system controller 16 receives parameters as described above via the display controller 151, the preview creating section 16a creates preview data (image) based on the parameters and setting request for the data processing section 13 from the original data stored in the storage section 12. The preview displaying section 16b sends the preview data to the display section 15 to display the preview image.

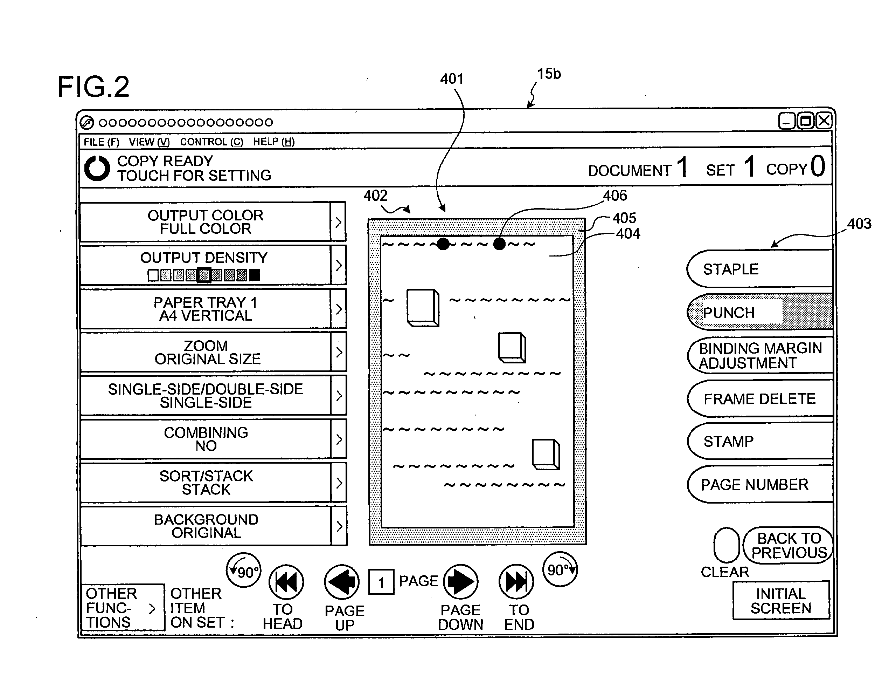

Fig. 2 is an example of a preview image created by the MFP 10. Preview data 402 and a function menu 403 are displayed within a display area 401 on the touch panel 15a. When the user touches the touch panel 15a with the pointer while viewing the preview data 402 displayed on the display panel 15b, the touch panel 15a receives positional information indicating a spatial position on the finished print of the preview data. The coordinate obtaining section 131 analyzes the positional information received by the touch panel 15a and obtains coordinates of the position touched by the pointer.

The MFP 10 displays the preview data (image) on the display panel 15b of the display section 15 so that the user can check the preview data before the data is actually printed.

The preview data 402 includes image data 404, print area data 405, and function display data 406. The image data 404 is obtained from data either read by the scanner 11 or input from an external device via the network 18. Although the image data 404 shown in the drawings is surrounded by a black frame for convenience of the description, usually, no such a black frame exists around the image data 404. The print area data 405 represents a print area. The function display data 406 indicates an image corresponding to an item selected from the function menu 403 (for example, punching) on the display section 15. A shaded rectangle represents the print area data 405. The user can check a position of the image data 404 on a sheet to be printed. Because an item, punch, in the function menu 403 is selected in Fig. 2, two black circles are displayed as the function display data 406 at an upper end, which indicates that paper has two punch holes at the upper end when printed.

Known techniques can be used for positioning the punch holes (for example, punching at the left end or the upper end), for example, when the user touches the punch item, a related menu is displayed to enabling the user to select a position of the punch holes. Therefore, the details thereof are not described herein.

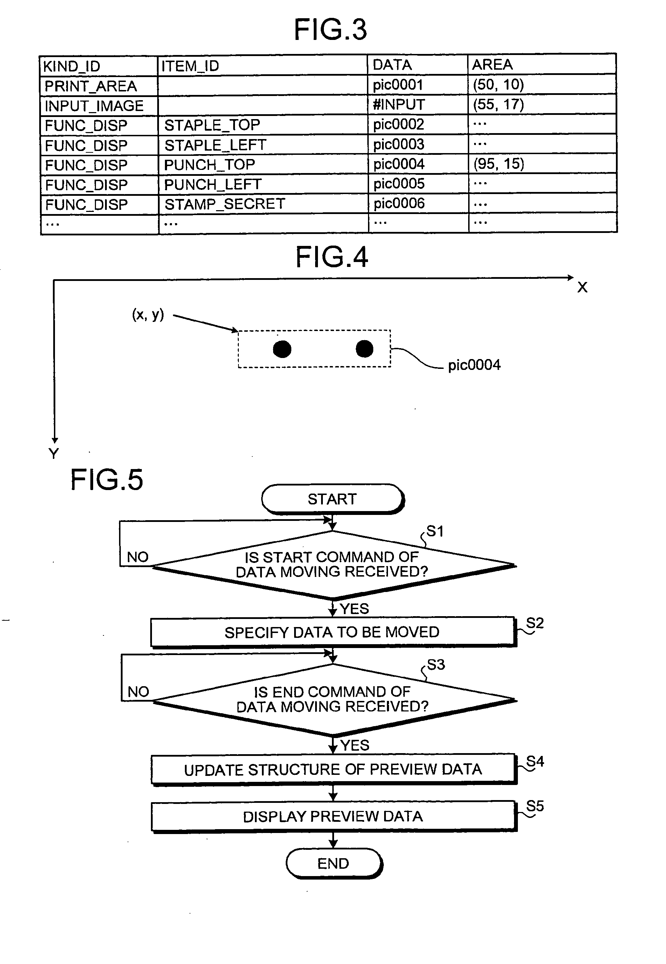

Fig. 3 is a table of the preview data stored in the display controller 151. Fig. 4 is a schematic for explaining a position of the data.

In Fig. 3, attributes of the preview data are shown in KIND_ID column, and PRINT_AREA represents the print area data 405, INPUT_IMAGE represents the image data 404, and FUNC_DISP represents the function display data 406. Attributes of items for the function display data 406 are shown in ITEM_ID column, and, for example, PUNCH_TOP represents an attribute of the item for punching two holes at the upper end as shown in Fig. 2. Data file names corresponding to the preview data or the items are shown in DATA column.

A position at which each of the preview data is displayed is shown in AREA column. As shown in Fig. 4, the position data in the AREA column represents X-Y cartesian coordinates (x, y) at the upper left corner of the data in the DATA column. Data pic0004 corresponding to the PUNCH_TOP is shown in Fig. 4. DATA pic0004 is a transparent rectangle with two black circles therein (for easy understanding, the rectangle is surrounded by a dotted line). Coordinates (x, y) represent a position of the upper left corner of the rectangle. A value starting from # represents a variable obtained from another configuration block.

The display controller 151 refers to the data structure shown in Fig. 3 to display the preview data 402 of Fig. 2 including the image data 404, the print area data 405, and the function display data 406.

Specifically, the display controller 151 positions Data pic001 (the print area data 405) at coordinates (50, 10) referring to DATA and AREA in the PRINT_AREA row. The origin of the coordinate system is the upper left corner of the display area 401 (i.e., outer black frame in Fig. 2) in the display section 15.

Next, referring to #INPUT in the INPUT_IMAGE row, the display controller 151 positions data either read by the scanner 11 or input from an external device via the network 18 (the image data 404) at coordinates (50, 17), such that the data is adjusted to a selected paper size.

Then, because the user selects the punch item, with reference to PUNCH_TOP (in the ITEM_ID column) in one of FUNC_DISP rows, the display controller 151 positions Data pic0004 (the function display data 406) at coordinates (95, 15).

To simplify the description, the AREA column contains only the coordinates of the display position and the data is located without any process. However, the AREA column can also contain area information for the data such as width w and height h in addition to x and y, i.e., (x, y, w, h). When the MFP 10 has the area information of (x, y, w, h) and a process step corresponding to the area information, the MFP 10 can display the preview data after zooming up or down.

With the processes described above, in the example shown in Fig. 2, the MFP 10 displays the preview data in which two black circles (punch holes) of the function display data 406 overlap the image data 404. The user can thereby notice the problem before the data is actually printed, and rearrange the data to solve the overlap problem.

Data moving process, a characteristic operation of the image processing apparatus 1, is described below. The data moving process is realized by a computer program stored in the ROM and executed by the CPU of the system controller 16. Shortly, the image data 404, the print area data 405, or the function display data 406 can be moved, when the user drags the data (the image data 404, the print area data 405, or the function display data 406) with the pointer on the touch panel 15a.

Fig. 5 is a flowchart of the data moving process. Upon receiving a touch signal (equivalent to a button press by a mouse) indicating that the pointer touches the touch panel 15a (Yes at step S1) through the display section 15, the data-move specifying section 16c obtains the coordinates of the point on the touch panel 15a at which the pointer has touched via the coordinate obtaining section 131. Based on the coordinates, the data-move specifying section 16c identifies which data (the image data 404, the print area data 405, or the function display data 406) is to be moved (step S2).

When the data-move specifying section 16c receives a button release signal indicating an end of data moving, e.g., the pointer is released from the touch panel 15a (Yes at step S3), the data moving section 16d updates the data structure of the preview data 402 (the image data 404, the print area data 405, or the function display data 406) according to the type of the data to be moved (step S4). Then, the preview displaying section 16b displays the preview data 402 including the moved data on the display panel 15b. The data structure of the preview data 402 is updated by the data generating section 132.

First, the process of moving the image data 404 is described. The user touches a part of the image data 404 on the touch panel 15a with the pointer, moves the image data 404 with the pointer touching the part, and then releases the image data 404 at a desired point. The data stops moving when the pointer is separated from the touch panel 15a or when the user cancels the data moving with the pointer touching the touch panel 15a. The data generating section 132 updates data in the INPUT_IMAGE row of the AREA column of the table shown in Fig. 3 to coordinates corresponding to the position where the data stops moving. The image data 404 is displayed on the display panel 15b based on the updated coordinates.

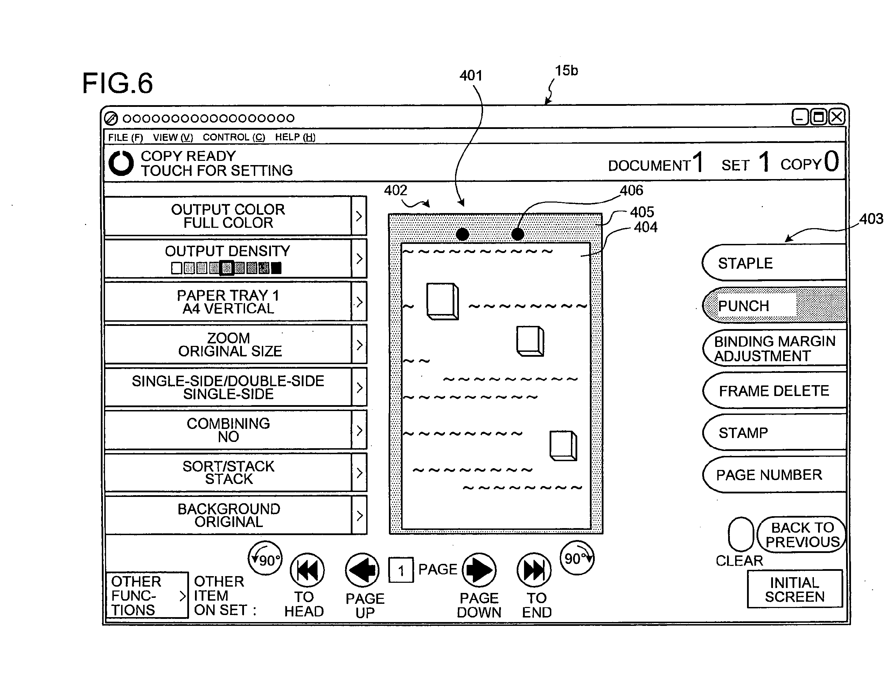

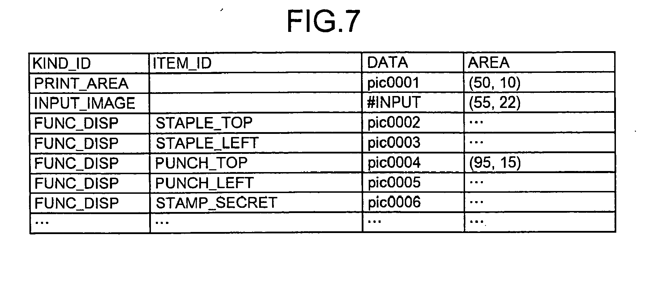

Fig. 6 is an example of a preview image after the image data 404 is moved downward not to overlap the punch holes. Fig. 7 is a table of a data structure of the preview data. Referring to Fig. 7, data in the INPUT_IMAGE row of the AREA column has been updated from the one shown in Fig. 3.

Second, the process of moving the print area data 405 is described. The user touches a part of the print area data 405 on the touch panel 15a with the pointer, moves the print area data 405 with the pointer touching the part, and then releases the print area data 405 at a desired point. The data stops moving when the pointer is separated from the touch panel 15a. The data generating section 132 updates data in the PRINT_AREA row of the AREA column of the table shown in Fig. 3 to coordinates corresponding to the position where the data stops moving and also updates data in the FUNC_DISP row of the AREA column to values increased by the distance traveled by the print area data 405. The print area data 405 and the function display data 406 are displayed on the display panel 15b based on the updated coordinates. It means that the print area data 405 is moved together with the function display data 406 without any change in the positional relationship between them.

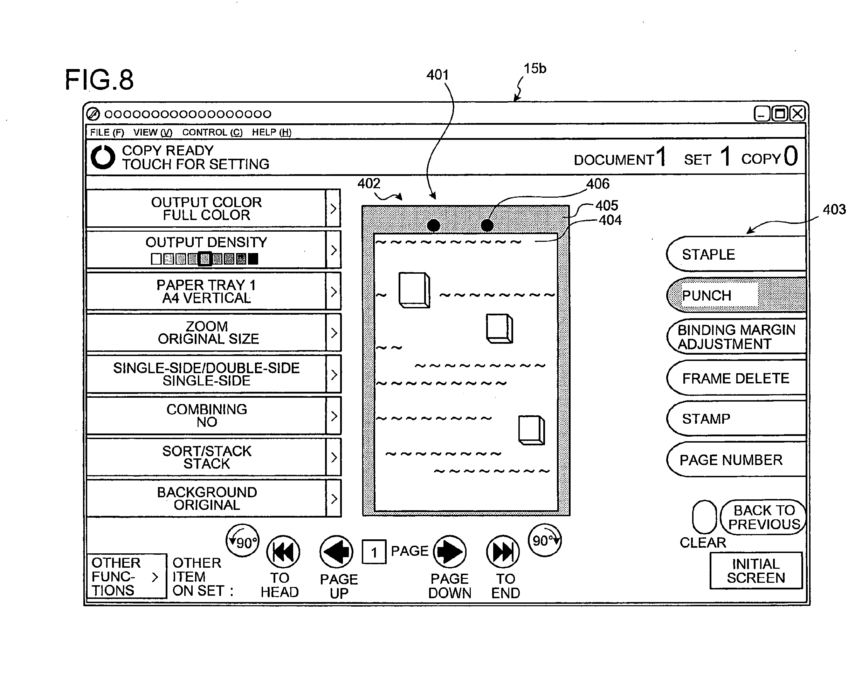

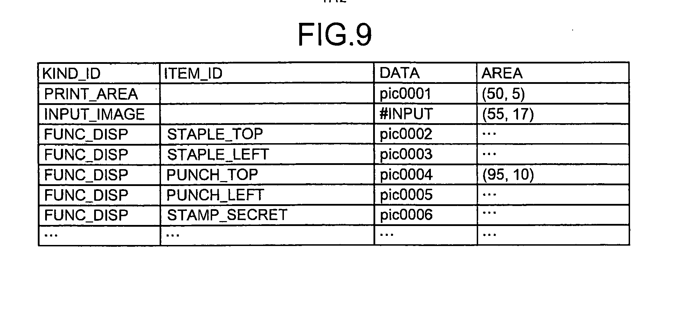

Fig. 8 is an example of a preview image after the print area data 405 is moved upward so that the image data 404 does not overlap the punch holes. Referring to Fig. 8, the preview data 402 (the image data 404, the print area data 405, and the function display data 406) has been moved upward compared to that in Fig. 6. Fig. 9 is a table of a data structure of the preview image shown in Fig. 8. Values in the PRING_AREA row and the FUNC_DISP row of the AREA column have been updated.

Similarly, the function display data 406 is moved together with the print area data 405 without a change in the positional relationship between them, and the same result is obtained as shown in Figs. 8 and 9. That is, by dragging the function display data 406, the user can visually rearrange the layout of a preview image, for example, move the punch holes upward, which improves the operability of the MFP 10.

Because the function display data 406 is moved together with the print area data 405 while maintaining the positional relationship therebetween, there is no need to replace hardware even if positions of punch holes and staples on paper are fixed in the hardware. Therefore, the production cost can be reduced.

A modification of the process for moving the function display data 406 is described below. In the example described above, when the function display data 406 is moved, the image data 404 remains at the original position. However, the image data 404 can be moved in an opposite direction by a distance the function display data 406 moves. Specifically, when the pointer touches and drags the function display data 406 upward and then releases it, the image data 404 moves downward by a distance the function display data 406 is moved. This achieves the same result as in Figs. 6 and 7, and avoids the problem that the pointer that touches the function display data 406 (punch holes) interferes with user's view of the preview data 402. Therefore, the user can easily check the preview data 402.

The preview data 402 after the data moving process is sent to the data processing section 13 where the printed position of the original data stored in the storage section 12 is adjusted based on the preview data 402. Thus, the data processing section 13 serves as a printing position adjusting section.

According to the first embodiment, the preview data 402 (the image data 404, and at least one of the function display data 406 and the print area data 405) is displayed on the display panel 15b. Based on a distance and a direction specified for each data of the preview data 402, the data is moved by the distance in the direction. After the data is moved, the preview data 402 is displayed again on the display panel 15b. That is, with the preview data 402 displayed on the display panel 15b, a distance and a direction to move each data constituting the preview data 402 can be directly specified via the display panel 15b. Thus, the user can rearrange the preview data 402 into a desired state, which reduces printing errors.

The function display data 406 can be moved by a distance in a direction specified to move it. In response to an input to move the print area data 405, the image data 404 can be moved together with the print area data 405 in the same direction. Further, in response to an input to move the image data 404, the print area data 405 can be moved together with the image data 404 in the same direction. In this case, however, the finishing section 141, which processes the function display data 406 according to an item selected from the function menu 403, should be able to shift a position to perform the finishing process (for example, stamping, stapling, and punching).

In the first embodiment, the punch function is selected as an example for the function display data 406 that indicates the two black circles as punch holes. It is clear that the same is applied to the case where another function, such as staple function or stamp function, is selected for the function display data 406.

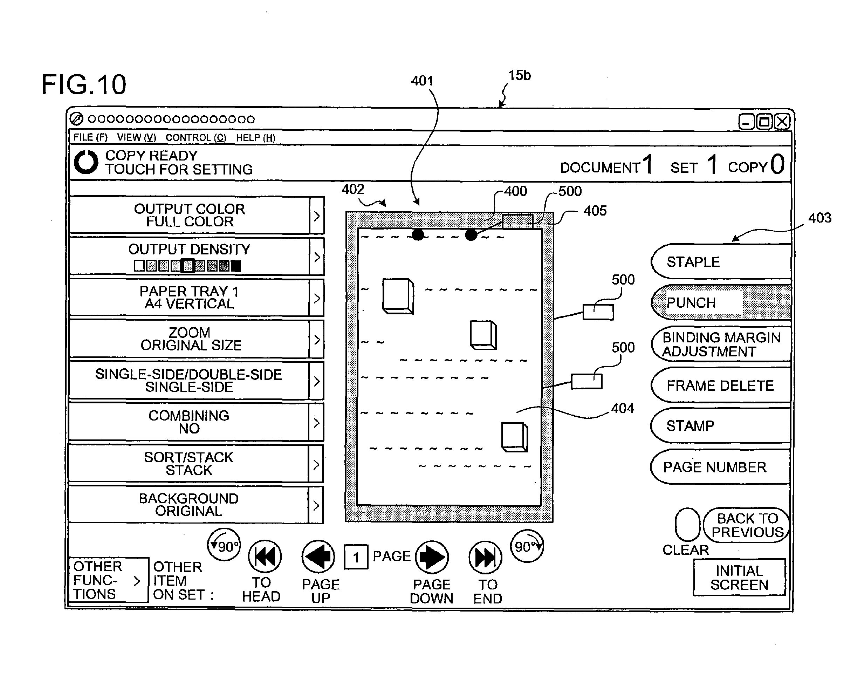

A second embodiment of the present invention is described below with reference to Fig. 10. The MFP 10 in the second embodiment is basically similar to that of the first embodiment; the same reference numerals are utilized in designating corresponding parts, and the same description is not repeated.

As shown in Fig. 10, the function display data 406 additionally includes data to display a tag 500, which the user touches to move the function display data 406.

By providing the tag 500 to the function display data 406, the user can more easily trace the movement of data compared to the case where the user directly specifies the punch halls with the pointer via the touch panel 15a.

The tag 500 can also be attached to either or both the image data 404 and the print area data 405 to move the data in a similar way.

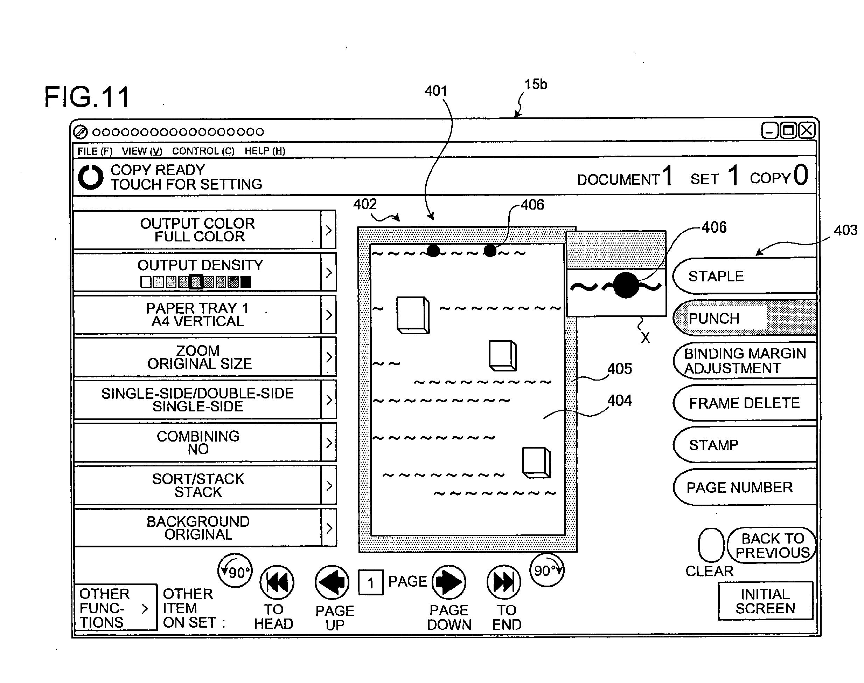

A third embodiment is described below with reference to Fig. 11. Parts corresponding to those in the first embodiment are denoted with the same reference numerals, and the same description is not repeated.

Fig. 11 is an example of a preview image when the right hole of two punch holes (black circles) is to be moved via the touch panel 15a with the pointer. As shown in Fig. 11, an enlarged display area X is additionally provided to display around the function display data 406 when the data is being moved. Namely, in the enlarged display area X, magnified view of an area around a point where the pointer points via the touch panel 15a is displayed. When the pointer points the left punch hole of the two black circles, an area around the left punch hole is displayed in the enlarged display area X.

As described above, according to the third embodiment, while touching the function display data 406 to move the data, the user can check the movement of the data enlarged and displayed in the enlarged display area X. This enables the user to easily check the preview data.

The image processing apparatus 1 is explained above as the MFP 10; however, the present invention is not so limited and can be implemented otherwise. For example, a computer program stored in a storage device of a computer, such as hard disk drive (HDD), can be executed by CPU on the computer connected to a printer or the like to realize the same function as the image processing apparatus 1.

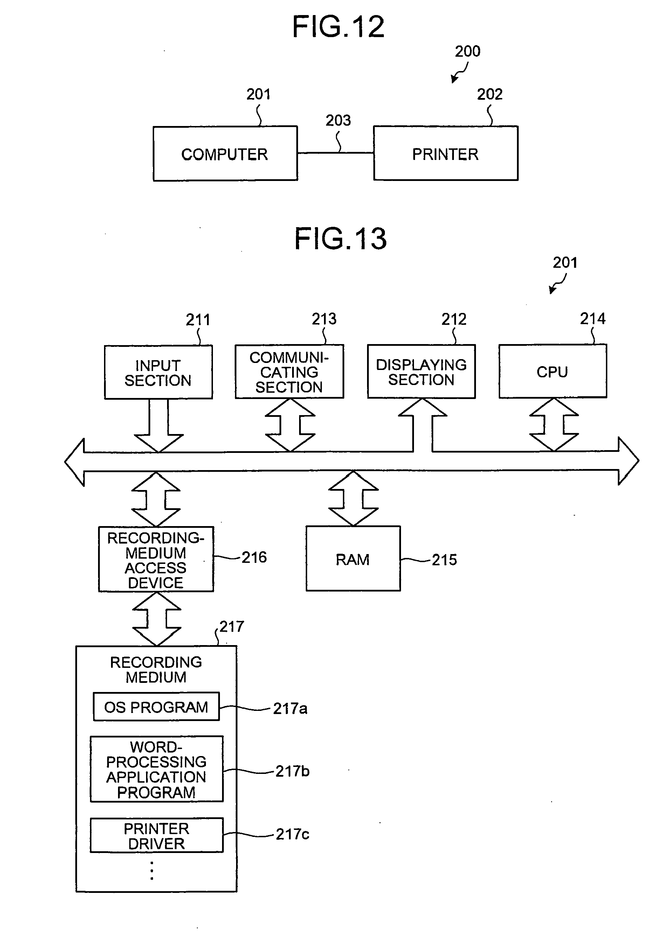

Fig. 12 is a schematic block diagram of a print system 200 according to a fourth embodiment of the present invention. The print system 200 includes a computer 201 that sends a print job including print data and print conditions according to which the print data is printed, and a printer 202 that prints the print data. The computer 201 and the printer 202 are connected via a cable 203.

The computer 201 sends the printer 202, as a print job, print data for a created document or image and print conditions (e.g., sheet direction, duplex printing, intensive, binding, stapling, punching, zooming up/down) that have been set to print the document.

The printer 202 prints the print data based on the print job. Particularly, upon receiving the print job, the printer 202 prints the print data based on the print conditions ona medium such as paper.

Fig. 13 is a schematic block diagram of the computer 201. The computer 201 includes an input section 211 that receives data, a displaying section 212, a communicating section 213 for data communication, a CPU 214 that controls the enter apparatus, a RAM 215 that is used as a work area for the CPU 214, a recording-medium access device 216 that reads and writes data to and from a recording medium 217, and the recording medium 217 that stores various programs, etc., run by the CPU 214.

The input section 211 is a user interface allowing a user to instruct the CPU 214 or to input data. The input section 211 includes a keyboard with cursor,keys, a numeric keypad, and various function keys, and a mouse or a slide pad with which a key is selected on a display of the displaying section 212.

The displaying section 212 includes a cathode ray tube (CRT) and a liquid crystal display (LCD) to display data sent from the CPU 214. The communicating section 213 communicates data with an external device. For example, the communicating section 213 communicates data with the printer 202 via the cable 203.

The CPU 214 controls the entire apparatus based on the programs stored in the recording medium 217, and is connected to the input section 211, the displaying section 212, the communicating section 213, the RAM 215, and the recording-medium access device 216. The CPU 214 controls data communications, reading of an application program by accessing a memory, reading and writing of various data, and receiving and displaying data and commands. In addition, the CPU 214 sends the printer 202, via the communicating section 213, print data and print conditions for the print data input through the input section 211 as a print job.

The RAM 215 includes a working memory that stores, for example, a specified program, an input command, input data, and a processing result, and a display memory that temporarily stores display data to be displayed on a screen of the displaying section 212.

The recording medium 217 stores data and various programs executable by the CPU 214 such as an operating system (OS) program 217a (for example, Windows (trademark)), a word-processing application program 217b, and a printer driver 217c compatible with the printer 202. Examples of the recording medium 217 include optical, magnetic, and electronic recording media such as FD, hard disk, CD-ROM, digital versatile disk read only memory (DVD-ROM), magneto-optical disk (MO), and personal computer card (PC card). The programs are stored in the recording medium 217 in a form readable by the CPU 214. The programs can be stored in the recording medium 217 in advance, or can be downloaded to the recording medium 217 via a communication line. The programs can also be distributed via the communication line.

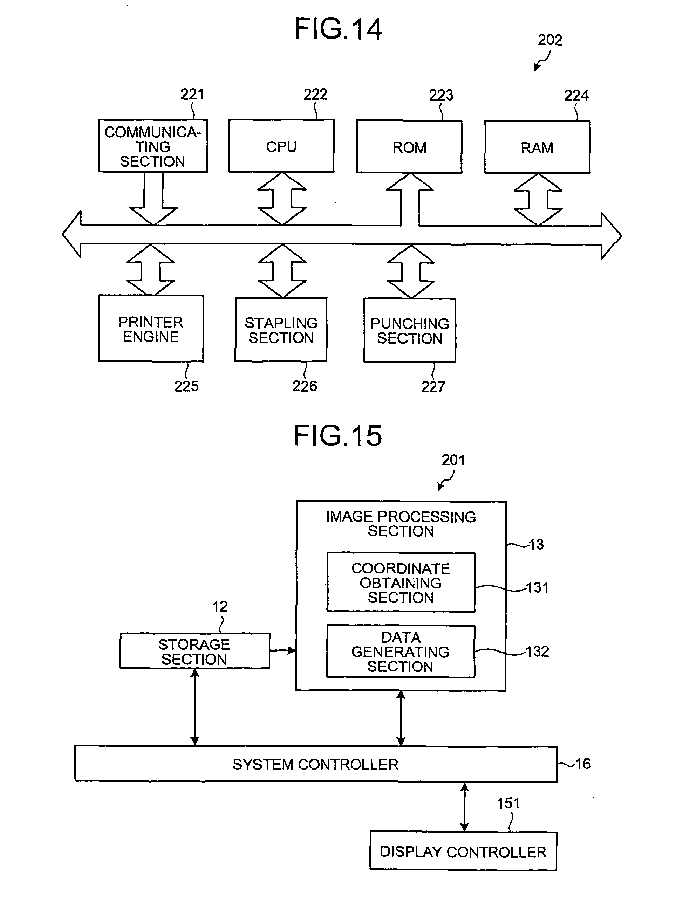

Fig. 14 is a schematic block diagram of the printer 202. The printer 202 includes a communicating section 221 for data communication, a CPU 222 that controls the entire printer 202, a ROM 223 that stores various control programs run by the CPU 222, a RAM 224 that temporarily stores a print job including print data and print conditions received from, for example, a work area of the control programs or the computer 201, a printer engine 225 that prints the print data on transfer paper, a stapling section 226 that staples sheets printed with the print data, and a punching section 227 that punches holes in the sheets. It means that the printer 202 has functions of duplex printing, punching, and stapling.

The communicating section 221 communicates data with an external device, for example, the computer 201.

The CPU 222 controls the entire printer 202 based on programs stored in the ROM 223 and is connected to the communicating section 221, the ROM 223, the RAM 224, the printer engine 225, the stapling section 226, and the punching section 227. The CPU 222 controls data communications, printer operations, or the like.

The ROM 223 stores therein various programs run by the CPU 222, parameters required for the programs, and the like. The RAM 224 includes a working memory that stores a specified control program, a processing result, and the print data.

The printer engine 225 employs an electrophotographic system and is used for printing the print data on transfer paper. As examples of printing methods employed by the printer 202 are cited the inkjet printing, dye sublimation thermal-transfer printing, silver halide photography printing, direct thermal recording, and fusion thermal-transfer printing, besides the electrophotographic printing.

The printer driver 217c is a software program designed to operate programs in relation to a specific program free from hardware or a language in the printer 202. The printer driver 217c controls the printer 202 and processes data for output or the like.

The CPU 214 of the computer 201 creates and displays preview data based on the print data and the print conditions input through the input section 211 according to the printer driver 217c, and transfers the print data created with the word-processing application program 217b to the printer 202.

With the programs executed by the CPU 214 according to the printer driver 217c, the computer 201 implements the storage section 12, the data processing section 13, the display controller 151, and the system controller 16.

By such an operation of the CPU 214, the computer 201 implements a system configuration equivalent to that of the image processing apparatus 1 shown in Fig. 1. Thus, the computer 201 can achieve the same effects as described previously in the first to third embodiments.

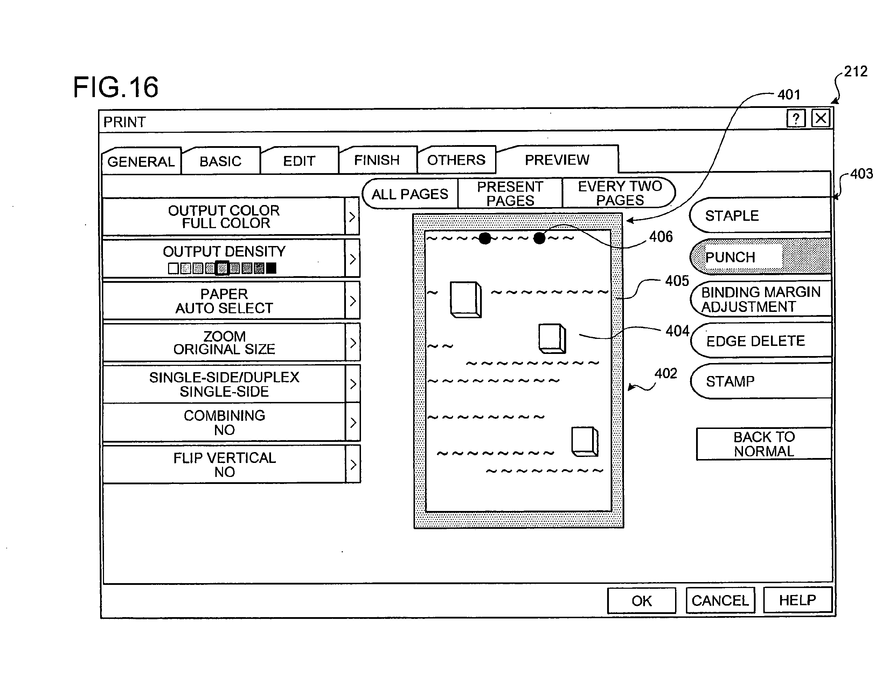

Fig. 16 is an example of a display screen displayed by the printer driver 217c. The display appears when activation of the printer driver 217c is selected from a display screen of the word-processing application program 217b or a display screen to activate the OS program 217a. On the display screen, the display area 401 (equivalent to the display area 401 of the image processing apparatus 1) for creating and displaying the preview data based on the print data and the print conditions input through the input section 211 is designed to be selectable in addition to a basic-condition selecting area, an edit-condition selecting area, and a finishing-condition selecting area.

Although in the fourth embodiment, the display area 401, on which the preview data based on the print data and print conditions input through the input section 211, is created and displayed by the CPU 214 of the computer 201 operated according to the printer driver 217c, this is only an example. The CPU 214 can be operated according to the word-processing application program 217b or the OS program 217a to display the display area 401.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. An image processing apparatus comprising:
a displaying unit (16b) that displays a preview including a data image corresponding to data input thereto and at least one of a function image corresponding to a selected function and a print-area image corresponding to a print area within which the data is to be printed;
a movement specifying unit (16c) that specifies, in response to an input to move any image in the preview, a distance and a direction based on which the image is to be moved; and
a moving unit (16d) that moves the image by the distance in the direction to rearrange layout of the preview to obtain a rearranged preview.

2. An image processing apparatus comprising:
a data creating unit (16a) that creates a preview including a data image corresponding to data input thereto and at least one of a function image corresponding to a selected function and a print-area image corresponding to a print area within which the data is to be printed;
a displaying unit (16b) that displays the preview;
a movement specifying unit (16c) that specifies, in response to an input to move any image in the preview, a distance and a direction based on which the image is to be moved; and
a moving unit (16d) that moves the image by the distance in the direction to rearrange layout of the preview.

3. An image processing apparatus according to claim 1, further comprising a position adjusting unit (13) that adjusts a position of the data image in the rearranged preview.

4. An image processing apparatus according to claim 1, wherein when the movement specifying unit (16c) specifies a distance and a direction in response to an input to move the data image, the moving unit (16d) moves the data image in the direction.

5. An image processing apparatus according to claim 1, wherein
the preview includes the data image, the function image, and the print-area image, and
when the movement specifying unit (16c) specifies a distance and a direction in response to an input to move the print-area image, the moving unit (16d) moves the print-area image together with the function image in the direction.

6. An image processing apparatus according to claim 1, wherein
the preview includes the data image, the function image, and the print-area image, and
when the movement specifying unit (16c) specifies a distance and a direction in response to an input to move the function image, the moving unit (16d) moves the function image together with the print-area image in the direction.

7. An image processing apparatus according to claim 1, wherein when the movement specifying unit (16c) specifies a distance and a direction in response to an input to move the function image, the moving unit (16d) moves the data image in a direction opposite to specified direction.

8. An image processing apparatus according to claim 1, wherein, when the movement specifying unit (16c) specifies a distance and a direction in response to an input to move the function image, the moving unit (16d) moves the function image in the direction.

9. An image processing apparatus according to claim 1, wherein when the movement specifying unit (16c) specifies a distance and a direction in response to an input to move the print-area image, the moving unit (16d) moves the print-area image together with the data image in the direction.

10. An image processing apparatus according to claim 1, wherein when the movement specifying unit (16c) specifies a distance and a direction in response to an input to move the data image, the moving unit (16d) moves the data image together with the print-area image in the direction.

11. An image processing apparatus according to claim 2, wherein the data creating unit (16a) creates the preview further including a tag corresponding to each of the images.

12. An image processing apparatus according to claim 1, wherein when the movement specifying unit (16c) is receiving an input to move any image in the preview, the preview is displayed with a magnified view of an area around the image.

13. An image processing apparatus according to claim 1, wherein the function image indicates a punch hole position.

14. An image processing apparatus according to claim 1, wherein the function image indicates a staple position.

15. An image processing apparatus according to claim 1, wherein the function image indicates a stamp position.

16. A computer program product comprising a computer usable medium having computer readable program codes embodied in the medium that when executed causes a computer to:
create a preview including a data image corresponding to data input thereto and at least one of a function image corresponding to a selected function and a print-area image corresponding to a print area within which the data is to be printed;
display the preview;
receive an input that specifies a distance and a direction to move any image in the preview; and
move the image by the distance in the direction to rearrange layout of the preview.

17. A preview data moving method comprising:
creating a preview including a data image corresponding to data input thereto and at least one of a function image corresponding to a selected function and a print-area image corresponding to a print area within which the data is to be printed;
displaying the preview;
receiving an input that specifies a distance and a direction to move any image in the preview; and
moving the image by the distance in the direction to rearrange layout of the preview.
